Europäisches Patentamt

European Patent Office

Office européen des brevets

(11) Publication number: 0 217 989
A1

# EUROPEAN PATENT APPLICATION

(21) Application number: 85306995.3

(22) Date of filing: 01.10.85

(51) Int. Cl.⁴: E04C 2/24 , E04F 15/02 , E01C 5/22

(43) Date of publication of application:
15.04.87 Bulletin 87/16

(84) Designated Contracting States:
BE DE FR GB IT LU NL SE

(71) Applicant: Thompson, Thomas L.
1515 Ocean Boulevard
Balboa California 92661(US)

(72) Inventor: Thompson, Thomas L.
1515 Ocean Boulevard
Balboa California 92661(US)

(74) Representative: Prentice, Raymond Roy
R.R. Prentice & Co. 34 Tavistock Street
London WC2E 7PB(GB)

(54) Method of forming a non-skid-surfaced wood panel.

(57) A method of forming a non-skid-surfaced wood panel, having a permanent but flexible bond between the wood and non-skid elements thereof, comprises applying a first layer of epoxy resin material (16) to a surface (18) of a plywood sheet (10), applying a second thicker layer (22) of epoxy resin over the first layer (16) and allowing the resin layers to dry, applying a coating (24) of polyurethane material over the resin layer (22), spreading grit particles (26) over the polyurethane coating (24) while said coating is still wet so that the grit particles are embedded in the polyurethane coating and then allowing said coating to dry. The grit particles project from the upper surface of the polyurethane coating so as to provide a non-skid surface which is extremely wear-resistant and which is particularly suitable for use on decking in marine environments.

FIG. 4

## METHOD OF FORMING A NON-SKID-SURFACED WOOD PANEL

This invention relates to a structural panel, and more particularly to a panel constructed preferably from a sheet of plywood that is processed so as to establish a method of forming a non-skid-surfaced wood panel, wherein the finished product provides a weatherproof and wear-resistant structure for areas subjected to heavy foot traffic, such as marine decking.

The invention as disclosed herein is particularly suitable for solving various and difficult problems associated with surface structures which are designed for heavy pedestrian traffic, especially with respect to those surfaces associated with marine-dock systems and their surrounding structures. Several types of walking surfaces have been employed for this purpose, but with limited success. At present, there are two widely used surface materials, one being made from wood products and the other being constructed from relatively thin concrete or cement slabs. Wood surfaces are generally formed from a multiplicity of juxtaposed plank members positioned transversely across the deck or walkway.

A dock structure or walkway formed from cement slabs is usually defined by elongated rectangular slab members having a thickness of from one to two inches. Even though cement surfaces are becoming more popular over wood surfaces in the construction of marinas and related floating-dock structures, there are two inherent problems that prevail. One of these is that concrete slabs are very heavy and add considerable weight to an already large and heavy structure, making them cumbersome and difficult to handle; and the other is that cement slabs used for dock fingers and walkways are not resilient, and have a tendency to crack when subjected to twisting and flexing in turbulent water caused by adverse weather conditions.

The present invention aims to provide a new method of forming a non-skid-surfaced wood panel that can be readily employed as a structural walkway or decking for marinas and like areas.

Another aim of the present invention is to provide a method of forming a non-skid-surfaced wood structure that is lightweight and wear-resistant, and capable of allowing heavy pedestrian traffic, while eliminating the above-mentioned problems that are inherent in the known surface structures.

Still another aim of the invention is to provide a non-skid, preferably plywood, panel structure that is lightweight, durable and resilient, so that it can flex without cracking.

According to one aspect of the invention, there is provided a method of forming a non-skid-surface wood panel having a permanent but flexible bond between said wood and the non-skid elements thereof, wherein the method comprises the steps of:

providing a sheet of wood having a substantially flat surface;

applying at least one coat of catalyzed resin material to said surface of the wood sheet;

drying said catalyzed resin coating;

applying at a predetermined thickness a coat of pigmented polyurethane material to form a surface layer over said catalyzed resin coating;

disseminating a hard grit material over said polyurethane coat while said polyurethane material is still in a wet stage, said grit material being of a size greater than the thickness of said polyurethane coat so as to allow a portion of said grit to be exposed above the surface of said polyurethane coat; and

allowing said polyurethane coat to dry, thereby securing said grit material within said polyurethane coat.

Another aspect of the present invention provides a method of forming a non-skid-surface wood panel having a permanent but flexible bond between said wood and the non-skid elements thereof, wherein the method comprises the steps of:

providing a panel of wood having a substantially flat surface;

providing a fiber/cement panel having a substantially flat surface with substantially the same configuration as said wood panel;

applying at least one coat of catalyzed resin material between said fiber/cement panel and said wood panel;

placing said surfaces of each panel into opposing engagement with each other;

applying pressure to said panels, whereby excess resin material is forced from between said panels;

allowing said catalyzed resin between said panels to dry;

applying at a predetermined thickness a coat of pigmented polyurethane material to form a surface layer over the exposed surface of said fiber/cement panel;

disseminating a hard grit material over said polyurethane coat while said polyurethane material is still in a wet stage, said grit material being of a size greater than the thickness of said polyurethane coat, so as to allow a portion of said grit to be exposed above the surface of said polyurethane coat; and

allowing said polyurethane coat to dry, thereby securing said grit material within said polyurethane coat.

Immediately following the first application, a second coat of catalyzed resin material, such as a thickened epoxy resin of approximately 20 to 30 mils, may be applied. This coat can be allowed to dry for approximately one hour at ambient temperature or may be positively dried under controlled temperature conditions.

In the case in which a fiber/cement panel is utilized, a third coat of catalyzed resin material may be applied to one surface of this panel prior to placing the coated surfaces of the two panels into opposing engagement with each other.

The grit material may comprise aluminium oxide which is evenly broadcast over the wet polyurethane surface. The grit should have a suitable coarseness so as to establish a sandpaper-like surface.

A second or finish coat of polyurethane material may be applied to reduce the sharpness of the grit particles.

The invention also extends to a non-skid-surface wood panel when made by the above-described method.

A non-skid-surface structure made by the method above described can be readily employed either as a permanent or a temporary walkway for pedestrian traffic at building sites, and for replacement and/or repair of worn walkways or decks that would otherwise need to be reconstructed.

The invention will now be further described, by way of example, with reference to the drawings, in which:-

Fig. 1 is a cross-sectional view of a piece of plywood, indicating the first step of applying a thin viscous coat of sealer material;

Fig. 2 is a cross-sectional view of the piece of plywood illustrating the second step of applying a thickened coat of an epoxy material;

Fig. 3 is still another similar cross-sectional view, showing a third step wherein a third thick coat is applied thereto;

Fig. 4 is another cross-sectional view, illustrating the last step of applying a grit material to the surface thereof; and

Fig. 5 is a cross-sectional view, illustrating an additional embodiment of the invention which uses a sheet of fiber/cement therewith.

In the drawings, like parts are denoted by like reference numerals.

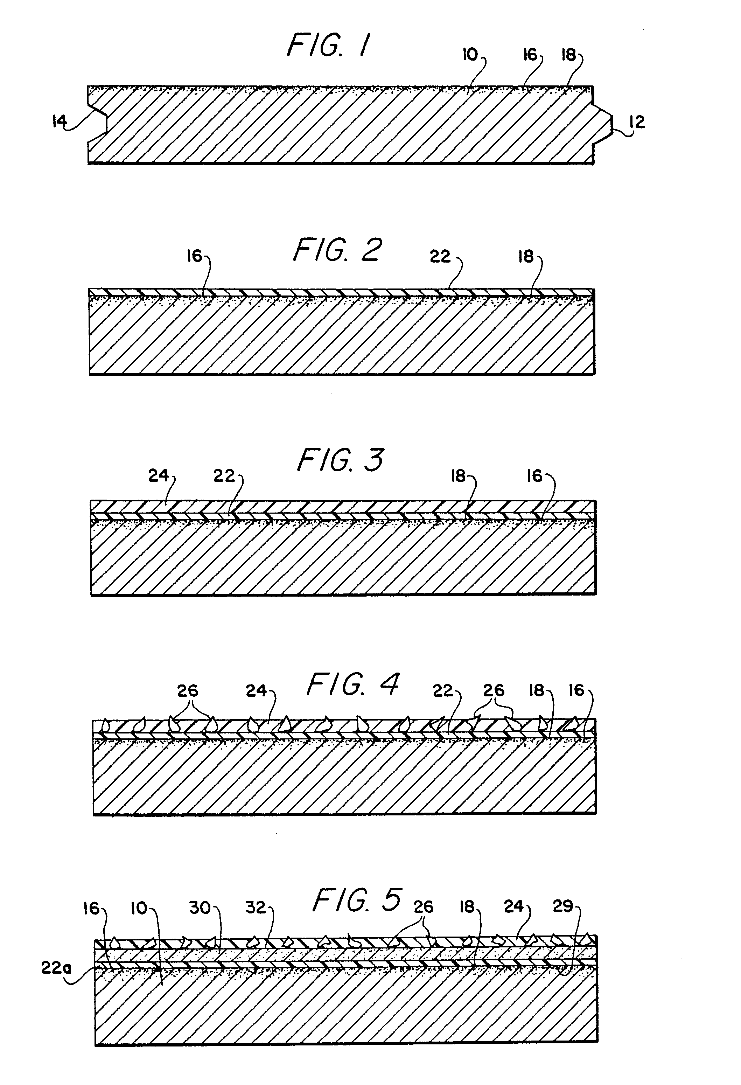

Referring to Figs. 1 to 4, there are shown enlarged cross-sectional views representing a non-skid-surfaced panel 10 illustrated in such a manner as to indicate sequentially the several necessary steps for the production thereof.

As previously mentioned above, there are several areas of application for which the present invention is well suited, even though its main purpose is to establish a non-skid decking in and about waterfront areas or related environments, and more particulary in connection with decking for marine-dock structures. However, it is readily apparent that, after understanding the end results of the present invention and its unique advantages, other uses for floorings, walkways and even roadways, can be established.

Fig. 1 shows a wood panel 10 which is formed preferably from a plywood structure having a thickness of between 0.63 and 6.35cm (1/4" -2-1/2"), with a specification requiring a 2.86cm (1-1/8") thick Grade CC exterior plywood panel which is pressure-preservative treated.

It is important to note, however, that other wood products, such as planks, boards, etc., can be substituted for the plywood which is used in the description because it is considered to be the preferred embodiment of the present invention.

The purpose of the particular method of forming the end product of the non-skid-surfaced panel is to provide a permanent but flexible bonding between the plywood and the non-skid elements thereof. Accordingly, the present invention defines a plywood panel of a generally rectangular configuration having the appropriate dimensions of a typical 122 x 244cm (4' x 8') panel. It is contemplated that each panel will include a tongue-and-groove arrangement. That is, a tongue 12 is formed along one longitudinal edge of the panel 10, and a matching groove 14 is formed along the oppositely disposed longitudinal edge. This establishes a contiguous sealed connection between adjacent panels when they are structurally placed.

Once the plywood panel 10 has been selected, a coat of catalyzed resin having a low viscosity is applied to the upper flat surface 18 of the panel. The catalyzed resin, normally an epoxy indicated by the dots 16, is applied in a thin liquid state, so as to penetrate within the surface 18, thus soaking into the wood fibers and readily sealing the surface. However, in some applications this step is not required.

The next step is to immediately apply a second or intermediate coat of the same type of catalyzed resin to the upper surface 18. However, this second or intermediate coat 22 is much thicker in viscosity and is formed having a thickness of between 10 to 30 mils. In order to aid in the bonding strength of the resin layer 22, there may be added thereto a sufficient amount of a thickening agent, which moreover provides a controlled viscosity of the resin. After the second coat 22 has been applied to the upper surface 18, it is allowed to harden together with the first thin coat 16. A very strong bond is thus established between the second thick coat 22 and the saturated wood fibers on surface 18. The time required for hardening of the second coat 22 can vary; but, generally, it takes about one hour to dry under normal, ambient, room temperature, although the plywood at this time can, if desired, be subjected to a predetermined controlled temperature, whereby the hardening time will be set under a selective temperature-controlled environment.

After hardening of the second coat 22, a third coat 24 is applied. This coat is preferably a pigmented polyurethane material that is spread or rolled over the coat 22 and is applied having a thickness of between 10 to 40 mils, but preferably 30 mils. The thickness of this coat is normally determined by the size and type of abrasive material that is combined therewith, the grit size being between No. 30 and No. 60. That is, while the polyurethane coat 24 is still very wet, and before it develops a skin-like surface, an overlay of very hard grit substance 26 is evenly spread or disseminated over the wet layer of polyurethane. It is preferred that the grit 26 be a No. 46 size of aluminium oxide, whereby a 30 mil thickness to layer 24 would be achieved so as to allow the very sharp edges of the aluminium oxide, sand-like particles to extend slightly above the surface of coat 24. Thus, the greater part of each grit particule is submerged and held in place by the thickness of the polyurethane material. It should be noted that other grit materials can also be used as an overlay under specific environmental conditions. Various materials such as silica sand and crushed walnut shells can be employed to provide a non-skid coating base.

A second embodiment is disclosed in Fig. 5, wherein a fiber/cement panel 30 having the same rectangular configuration as that of the plywood panel 10 is placed over the second or intermediate layer of catalyzed resin 22 and is thereby bonded to the plywood panel. The fiber/cement panel 30 is relatively thin and has a thickness of approximately 0.32cm (1/8"). This panel generally consists of 36% Portland cement; 30% crushed limestone; 20% Possolan volcanic ash; and 14% fibrous material. This particular composition is highly resistant to salt corrosion, has excellent chemical resistance, and has resilient qualities to prevent cracking when subjected to constant movement, particularly when used as a walking surface on a floating-dock structure supported in a body of water, in which case the panels bend and twist to some extent.

The following additional steps are required when the fiber/cement panel is employed:

After applying the second coat of thicker resin 22 to the plywood surface 16, this same thicker resin is also applied to the underside 29 of the fiber/cement panel 30. While both resin coats are still wet, the fiber/cement panel 30 is positioned over the plywood panel, allowing the two resin coats to commingle so as to define an intermediate layer 22a. At this time, the two attached panels 10 and 30 are placed in a presss at which approximately 2.93kg cm² (100 p.s.i) pressure is applied, thus forcing out the excess epoxy material and establishing a very thin bonding line between the two panels.

Once this is accomplished, the pigmented polyurethane material coat 24 is applied to the upper surface 32 of the panel 30 together with an overlay of grit material 26 as above described. Again, the thickness of the coat 24 is determined by the size and type of abrasive material 26 that is applied thereafter.

It should be noted, however, that on some occasions the grit (aluminium oxide) may prove to be too abrasive for use as intended, in which case it will then be necessary to apply a second coat of polyurethane so as to reduce the sharpness of the abrasive particles. The second coat will further cover the grit surfaces to the level where only the top points of the grip are protruding from the surface, or the points might be slightly covered in the case of lower-lying grit particles. As foot traffic wear takes place, some of these lower particles of grit will wear through the top cover coat and provide part of the non-skid effect. Furthermore, the second coat will also trap any loose grit that, for some reason, might not be well fastened into the first coat. A second benefit is derived from employing a second finished polyurethane coat -which is that the color of the surface can be precisely controlled.

The invention and its attendant advantages will be understood from the foregoing description; and it will be apparent that various changes may be made in the form, construction and arrangement of the parts of the invention without departing from the scope thereof or sacrificing its material advantages, the arrangements hereinbefore described being merely by way of example.

## Claims

1. A method of forming a non-skid-surface wood panel having a permanent but flexible bond between said wood and the non-skid elements thereof, wherein the method comprises the steps of:

providing a sheet of wood having a substantially flat surface;

applying at least one coat of catalyzed resin material to said surface of the wood sheet;

drying said catalyzed resin coating;

applying at a predetermined thickness a coat of pigmented polyurethane material to form a surface layer over said catalyzed resin coating;

disseminating a hard grit material over said polyurethane coat while said polyurethane material is still in a wet stage, said grit material being of a size greater than the thickness of said polyurethane coat so as to allow a portion of said grit to be exposed above the surface of said polyurethane coat; and

allowing said polyurethane coat to dry, thereby securing said grit material within said polyurethane coat.

2. A method according to claim 1, wherein the catalyzed resin coating is allowed to dry at ambient temperature.

3. A method according to claim 1, wherein the catalyzed resin coating is dried under controlled temperature conditions.

4. A method according to any preceding claim, wherein a first coat of low-viscosity, catalyzed resin material is applied to the surface of the wood sheet so as to penetrate and seal said surface and wherein a second coat of catalyzed resin material is applied to the coated surface of the wood sheet prior to the drying of the first coat of catalyzed resin material, said second coat having a higher viscosity than said first coat.

5. A method of forming a non-skid-surface wood panel having a permanent but flexible bond between said wood and the non-skid elements thereof, wherein the method comprises the steps of:

providing a panel of wood having a substantially flat surface;

providing a fiber/cement panel having a substantially flat surface with substantially the same configuration as said wood panel;

applying at least one coat of catalyzed resin material between said fiber/cement panel and said wood panel;

placing said surfaces of each panel into opposing engagement with each other;

applying pressure to said panels, whereby excess resin material is forced from between said panels;

allowing said catalyzed resin between said panels to dry;

applying at a predetermined thickness a coat of pigmented polyurethane material to form a surface layer over the exposed surface of said fiber/cement panel;

disseminating a hard grit material over said polyurethane coat while said polyurethane material is still in a wet stage, said grit material being of a size greater than the thickness of said polyurethane coat, so as to allow a portion of said grit to be exposed above the surface of said polyurethane coat; and

allowing said polyurethane coat to dry, thereby securing said grit material within said polyurethane coat.

6. A method according to claim 5, wherein a first coat of low viscosity, catalyzed resin material is applied to the surface of the wood panel so as to penetrate and seal said surface and wherein a second coat of catalyzed resin material is applied to the coated surface of the wood panel prior to the drying of said first coat of catalyzed resin material, said second coat having a higher viscosity than said first coat.

7. A method according to claim 6, wherein a third coat of catalyzed resin is applied to one surface of the fiber/cement panel prior to placing the coated surfaces of each panel into opposing engagement with each other.

8. A method according to any preceding claim, wherein a second or finish coat of polyurethane material is applied to reduce the sharpness of said grit particles.

9. A non-skid-surface wood panel when made by the method claimed in any one of the preceding claims.

FIG. 1

FIG. 2

FIG. 3

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 285 146 (MILLER) <br> * Column 1, lines 19-27; column 1, line 42 - column 2, line 9; figures * | 1,9 | E 04 C 2/24 <br> E 04 F 15/02 <br> E 01 C 5/22 |
| A | US-A-4 054 699 (BRINKLEY) <br> * Whole document * | 1,9 | |
| A | GB-A-1 525 228 (SALCESEN) <br> * Page 1, lines 11-33,55-71; page 2, lines 1-34 * | 1,9 | |
| A | US-A-3 334 555 (NAGIN) <br> * Column 4, line 7 - column 5, line 13; column 5, line 64 - column 6, line 6; figures * | 1,4,9 | |
| A | US-A-4 517 239 (THOMPSON) <br> * Abstract; figures * | 5 | TECHNICAL FIELDS SEARCHED (Int. Cl.4) |
| A | GB-A-1 560 692 (FERGUSON) | | E 04 C <br> E 04 F <br> B 63 B <br> E 01 C |
| E | US-A-4 555 292 (THOMPSON) <br> * Whole document * | 1-9 | |

The present search report has been drawn up for all claims

| Place of search <br> THE HAGUE | Date of completion of the search <br> 02-06-1986 | Examiner <br> VANDEVONDELE J.P.H. |
|---|---|---|